# EUROPÄISCHE PATENTSCHRIFT

(11) **EP 1 875 066 B1**
(45) Veröffentlichungstag und Bekanntmachung des Hinweises auf die Patenterteilung: **11.11.2009**
(21) Anmeldenummer: 06708670.2
(22) Anmeldetag: 07.03.2006
(51) Int. Cl.: F02M 61/16, F02M 59/46

(54) **VORMONTIERTE ANKERGRUPPE FÜR COMMON RAIL INJEKTOR**
PREASSEMBLED ARMATURE GROUP FOR A COMMON RAIL INJECTOR
BLOC INDUIT PREMONTE POUR UN INJECTEUR A RAMPE COMMUNE

(30) Priorität: 14.04.2005 DE 102005017267
(43) Veröffentlichungstag der Anmeldung: 09.01.2008
(73) Patentinhaber: ROBERT BOSCH GMBH, 70442 Stuttgart (DE)
(72) Erfinder: HANNEKE, Juergen, 70499 Stuttgart (DE); LANDHAEUSSER, Felix, 73274 Notzingen (DE); HOWEY, Friedrich, 71254 Ditzingen (DE)
(86) Internationale Anmeldenummer: PCT/EP2006/060520
(87) Internationale Veröffentlichungsnummer: WO 2006/108742

(56) Entgegenhaltungen:
- EP-A- 1 382 839
- WO-A-02/50424
- DE-C1- 10 240 442
- US-A- 6 161 813
- US-A1- 2003 155 440

## Beschreibung

### Technisches Gebiet

Schnell schaltende Magnetventile werden in Kraftstoffinjektoren von Verbrennungskraftmaschinen zur Steuerung eines Einspritzventils einer elektrisch gesteuerten Kraftstoffeinspritzeinrichtung mit Ventilnadel eingesetzt. Die Ventilnadel des Kraftstoffeinspritzventils wird dabei von einem in einem Steuerraum herrschenden Druck in Schließrichtung belastet. Zur Einleitung der Einspritzung führt der angeregte Magnet des Magnetventils zu einer Druckentlastung des Steuerraums, worauf die Ventilnadel durch den an der gegenüberliegenden Seite anliegenden Hochdruck von ihrem Sitz abgehoben wird.

### Starid der Technik

Durch die WO 02/50424 A, US 2003/155440 und US 6 161 813 A ist jeweils ein Verfahren zur Einstellung eines vorgegebenen Hubs eines mehrteiligen Ankers eines Magnetventils bekannt. Dabei wird ein verschiebbares Element auf einen Ankerbolzen aufgebracht. Des weiteren wird eine Fixierhülse, die mindestens einen Anschlag aufweist, auf den Ankerbolzen aufgebracht. Schließlich wird die Fixierhülse derart mit dem Ankerbolzen verbunden, dass das verschiebbare Element um einen vorgegebenen Hub zwischen einem ersten Anschlag und dem an der Fixierhülse angebrachten Anschlag verschiebbar ist.

DE 196 50 865 A1 beschreibt ein Magnetventil zur Steuerung des Kraftstoffdruckes in einem Steuerraum eines Einspritzventils, etwa eines Common-Rail-Einspritzsystems. Über den Kraftstoffdruck im Steuerraum wird eine Hubbewegung eines Ventilkolbens gesteuert, mit dem eine Einspritzöffnung des Einspritzventils geöffnet oder geschlossen wird. Das Magnetventil umfasst einen Elektromagneten, einen beweglichen Anker und ein mit dem Anker bewegtes und von einer Ventilschließfeder in Schließrichtung beaufschlagtes Ventilglied, das mit dem Ventilsitz des Magnetventils zusammenwirkt und so den Kraftstoffabfluss aus dem Steuerraum steuert.

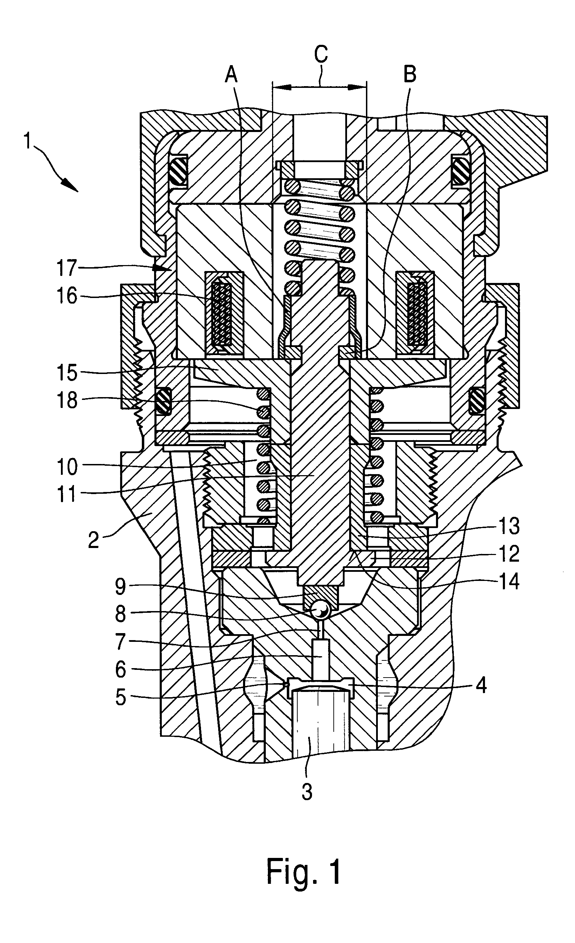

Bei bekannten Magnetventilen wirkt sich nachteilig das im Betrieb vorkommende Schwingen des Ankers und /oder Prellen des Ventilglieds aus. Durch ein Nachschwingen der auf den Ventilsitz auftreffenden Ankerplatte nimmt diese eine undefinierte Lage ein. So kommt es bei nachfolgenden Einspritzungen bei gleicher Ansteuerung zu unterschiedlichen Öffnungszeiten des Magnetventils und somit zu einer Streuung des Einspritzbeginns und der Einspritzmenge. Gemäß DE 196 50 865 A1 und DE 197 08 104 A1 ist der Anker des Magnetventils als zweiteiliger Magnetanker ausgebildet, um so die bewegte Masse der Einheit Anker - Ventilglied und damit die das Prellen verursachende kinetische Energie zu verringern. Der zweiteilige Anker umfasst einen Ankerbolzen und eine auf dem Ankerbolzen gegen die Kraft einer Rückstellfeder in Schließrichtung des Ventilglieds unter Einwirrer trägen Masse verschiebbar aufgenommene Ankerplatte, welche mittels einer Sicherungsscheibe und eine diese umgebende Sicherungshülse am Ankerbolzen gesichert ist. Ein derartiger, bekannter Anker ist in Figur 1 dargestellt. Die Sicherungshülse und die Sicherungsscheibe sind vom Magnetkern umschlossen, wodurch sich ein erhöhter Platzbedarf ergibt und was zu einem höheren Durchmesser im Magnetkern führt. Aufgrund des höheren Durchmessers im Magnetkern wiederum ergibt sich eine Begrenzung des magnetischen Flusses.

Zusätzliche Dämpfungseinrichtungen werden verwendet, bestehend aus einem mit der Ankerplatte bewegten und einem ortsfesten Teil. Der mit der Ankerplatte bewegbare Teil umfasst eine dem ortsfesten Teil zugewandten Ansatz, um eine Dämpfung des Nachschwingens der Ankerplatte bei seiner dynamischen Verschiebung zu bewirken. Der andere Teil der Dämpfungseinrichtung ist an einem ortsfest angeordneten Teil des Magnetventils als ein Überhubanschlag ausgebildet, welcher die maximale Weglänge begrenzt, um die sich die Ankerplatte an dem Ankerbolzen bewegen kann. Der Überhubanschlag kann durch eine Stirnseite eines den Ankerbolzen führenden ortsfest im Magnetventil angeordneten Gleitstücks oder durch ein dem Gleitstück vorgelagertes Teil, beispielsweise eine Scheibe gebildet sein. Bei Annäherung des mit der Ankerplatte bewegten Ansatzes an den Überhubanschlag entsteht zwischen den sich zugewandten Flächen ein hydraulischer Dämpfungsraum. Der in dem hydraulischen Dämpfungsraum vorhandene Kraftstoff erzeugt eine Gegenkraft, die der Bewegung der Ankerplatte entgegenwirkt, so dass ein Nachschwingen der Ankerplatte stark gedämpft wird.

Als problematisch hat sich die exakte Einstellung der maximalen Weglänge erwiesen, die der Ankerplatte an dem Ankerbolzen als Gleitweg zur Verfügung steht. Die als Hub bezeichnete maximale Weglänge, welche sich aus Ankerhub und Überhub zusammensetzt, wird im Allgemeinen mit einer Standardscheibe gemessen. Danach wird eine klassierte Einstellscheibe eingelegt, um den Sollhub einzustellen. Die Magnetgruppe wird dann mit dem Injektorkörper verschraubt und anschließend wird der Hub in dem verschraubten bzw. verspannten Zustand vermessen. Für die Anwendung sind für den Hub allenfalls Toleranzen im Mikrometerbereich tolerierbar, um ein reproduzierbares Injektorverhalten zu gewährleisten. Damit die engen Toleranzgrenzen auch tatsächlich eingehalten werden, ist häufig eine Demontage der vollständigen Magnetgruppe notwendig. Gegebenenfalls muss der Vorgang mehrmals wiederholt werden, bis akzeptable Toleranzeinhaltungen erzielt werden, was in der Fertigung zu hohen Kosten führt.

Zur Vermeidung einer Demontage der vollständigen Magnetgruppe zur exakten Einstellung des Hubs ist in DE 102 32 718 A1 eine Vormontage einer Ankerbaugruppe beschrieben. Hierbei umfasst die Ankerbaugruppe einen Ankerbolzen, eine Ankerplatte und eine als Passschraube ausgebildete Ventilspannschraube mit Ankerbolzenführungsabschnitt. Eine außerhalb des Injektorkörpers stattfindende Vormontage erlaubt eine gemeinsame Einstellung der Toleranz von Ankerhub und Überhub mittels eines konisch oder zylindrisch beschaffenen Passstiftes, der die Ankerplatte mit dem Ankerbolzen verbindet. Als nachteilig erweist sich, dass sich die Anzahl der zu montierenden Elemente erhöht. Zur Einstellung eines vorgegebenen Hubs müssen enge Toleranzen, für die zu verbindenden Elemente Passstift, Ankerbolzen und Ankerplatte sowie den Aufnahmeöffnungen des Passstiftes eingehalten werden. Die Montage ist aufwendig.

### Vorteile der Erfindung

Mit der erfindungsgemäß vorgeschlagenen Lösung gemäß Anspruch 1 lässt sich in einer Vormontage einer Ankerbaugruppe, die eine Ankerplatte, einen Ankerbolzen, eine Ankerfeder und eine Ankerführung umfasst, eine Einstellung eines vorgegebenen Hubs unter der Berücksichtigung enger Toleranzen, gebildet aus Ankerhub und Überhub, auf effiziente Weise erreichen. Die Anzahl der Teile der Ankerbaugruppe ist gegenüber dem Stand der Technik reduziert, da eine den Überhub festlegende Einstellscheibe entfällt, die üblicherweise auf dem Abschnitt des Ankerbolzens aufgebracht und durch eine Sicherungshülse am Ankerbolzen gesichert ist, der über die Ankerplatte hinaus in die Innenbohrung des Magnetkerns ragt. Die einzelnen Teile der Ankerbaugruppe weisen eine einfache Gestaltung auf und unterliegen keinen engen Toleranzanforderungen. Die Einstellung eines vorgegebenen Hubs, d.h. der zur Verfügung stehenden maximalen Weglänge, erfolgt in außerhalb des Injektors stattfindenden Schritten unter Berücksichtung der Geometrien der zu verbindenden Elemente der Ankerbaugruppe, womit fertigungsbedingte Schwankungen ausgeglichen werden können. Somit können ein Ankerhub und ein Überhub, der maßgeblich für die Streuung von Einspritzmengen von Injektor zu Injektor ist, mit sehr kleinen Toleranzen eingestellt werden. Die Mengentoleranzen werden reduziert und die erforderliche Prozesssicherheit wird gewährleistet. Eine in ihrer Gestaltung einfache, auf den Ankerbolzen aufgebrachte und positionierte Fixierhülse legt die maximale Weglänge fest, welche im wesentlichen dem Ankerhub und dem Überhub entspricht.

Das Zusammenfügen der Teile der Ankerbaugruppe im Rahmen einer Vormontage außerhalb des Injektors erleichtert die Montage und die Einstellung des Spalts und schränkt dessen Toleranz ein. Somit kann die Genauigkeit der Einspritzmenge von Injektor zu Injektor deutlich verbessert werden. Darüber hinaus bietet die Vormontage der Ankerbaugruppe den Vorteil, dass die vormontierte Gruppe in den Injektor eingebaut werden kann, ohne dass Montageschritte in dem wertvollen Injektor durchgeführt werden müssen. Erfüllt eine Ankerbaugruppe die Toleranzanforderungen nicht, kann dies vor der Montage in den Injektor ermittelt werden, so dass eine kostspielige Demontage des Injektors entfällt.

Die erfindungsgemäß vorgeschlagene Lösung eines mittels einer exakt positionierten Fixierhülse definierten Überhubanschlags zur Festlegung des vorgegebenen Hubs und enger Toleranzen dient zur Reduzierung des Bauraums der Ankerbaugruppe innerhalb des Magnetkerns. Somit entfällt die üblicherweise verwendete Einstellscheibe, die mit einer Sicherungshülse am Ankerbolzen gesichert wird, um den Überhubanschlag festzulegen. Durch diese Sicherungshülse, die in der Innenbohrung des Magnetkernes platziert ist, reduziert sich die Ausbeute an Magnetkraft durch den notwendig großen Durchmesser der Innenbohrung des Magnetkerns. Eine erfindungsgemäße Fixierhülse dagegen ermöglicht eine Verkleinerung des Innendurchmessers des Magnetkerns. Hiermit kann die Magnetkraft gesteigert werden, was die Anwendung höherer Drücke gestattet. Das Querschnittsverhältnis von Aussenpol zu Innenpol des Magnetkerns wird optimiert, so dass eine Begrenzung des Magnetflusses im Innenpol aufgehoben wird.

Nach Aufstecken der Fixierhülse und Positionierung derselben, kann die Sicherung der Fixierhülse erfindungsgemäß erfolgen, indem sie beispielsweise mit einer axial gerichteten Vorspannkraft aufgebracht und in Lage gehalten wird und anschließend mit einer radial wirkenden Verpresskraft lokal verformt wird, so dass eine form- und/oder kraftschlüssige Verbindung zwischen Fixierhülse und Ankerbolzen erreicht wird. Die Ausgestaltung des Ankerbolzens, als Teil des Ankers, kann wesentlich vereinfacht werden, da in einer erfindungsgemäßen Ausführungsform zur Sicherung der Fixierhülse nur eine Rille oder Schulter oder eine erhöhte Oberflächenrauhigkeit an dem Teil des Ankerbolzens vorgesehen ist, der über die Stirnfläche der Ankerplatte hinaus in den Magnetkern ragt. In einer alternativen Ausführungsform weist der Teil des Ankerbolzens, an dem die Fixierhülse fixiert wird, am Umfang verteilt Keile auf, in welche an dem Innendurchmesser der Fixierhülse verteilte Keile greifen und so eine form- und kraftschlüssige Verbindung erzeugen.

Die erfindungsgemäße vormontierte Ankerbaugruppe liegt in dem Injektorkörper auf der Auflagefläche der Magnethülse auf, wobei zwischen Ankerführung und Auflagefläche eine Einstellscheibe vorgesehen ist, welche nach Verschrauben mittels einer Magnetspannschraube von Magnethülse und Injektorkörper den Ankerhub festlegt. Der Überhub stellt sich dann als Maß zwischen dem durch die Fixierhülse festgelegten Hub und dem Ankerhub dar. So wird sichergestellt, dass Injektoren mit hohem Ankerhub eher niedrige Überhübe und umgekehrt aufweisen. Injektoren mit hohem Ankerhub haben eine hohe Endgeschwindigkeit beim Schließen des Ventils. Der kleine Überhub trägt dazu bei, dass die zusätzliche kinetische Energie schnell abgebaut wird.

Der Ankerbolzen kann mit der erfindungsgemäßen Lösung besonders einfach gestaltet werden, was eine kostengünstige Fertigung ermöglicht. Er kann ebenso als Auflagefläche für die die Ankerbaugruppe beaufschlagende Ventilfeder verwendet werden, womit sich der Bauraum innerhalb der Innenbohrung des Magnetkerns weiter vorteilhaft reduziert und so sich wiederum eine größere elektromagnetisch erzeugte Betätigungskraft erreichen lässt.

Die abhängigen Ansprüche beschreiben vorteilhafte Ausführungsformen des Verfahrens nach Anspruch 1.

### Zeichnung

Anhand der Zeichnung wird die Erfindung nachstehend näher erläutert.

Es zeigt:
- Figur 1: einen Schnitt durch einen Kraftstoffinjektor mit einem Magnetventil gemäß des Standes der Technik mit vom Ankerkern umschlossener Sicherungshülse und Sicherungsscheibe,
- Figur 2: eine Magnetventilbaugruppe an einem Kraftstoffinjektor im Längsschnitt;
- Figur 3: eine Ankerbaugruppe;
- Figur 4: ein Ablaufschema der Vormontageschritte der Ankerbaugruppe;
- Figur 5: eine nicht erfindungsgemäße Montageform einer Ankerbaugruppe mit einer Ankerplatte, einer Ankerführung, einem Ankerbolzen und einer Fixierhülse, deren Position mit einer Einstellscheibe festgelegt wird;
- Figur 6: eine nicht erfindungsgemäße Montagefonn einer Ankerbaugruppe, bei welcher die Position einer Fixierhülse mittels eines Piezoschrittmotors festgelegt wird,
- Figur 7: eine erfindungsgemäße Ausführungsform einer Fixierhülse;
- Figur 8: eine Kreiskeilverbindung zwischen einem Ankerbolzen und einer Fixierhülse im Schnitt;
- Figur 9: eine Ankerbaugruppe.

### Ausführungsbeispiele

Figur 1 zeigt einen Schnitt durch einen Kraftstoffinjektor mit einem Magnetventil, dessen Magnetkern eine an einem Ankerbolzen aufgenommene Einstellscheibe sowie eine Sicherungshülse umschließt.

Der in Figur 1 dargestellte Kraftstoffinjektor umfasst einen Ventilkörper 2, in welchem ein Einspritzventilglied 3 beweglich geführt ist. Das Einspritzventilglied 3 wird an einer Stirnseite über den in einem Steuerraum 4 herrschenden Druck beaufschlagt. Die Befüllung des Steuerraums 4 erfolgt über eine Zulaufdrossel 5. Eine Druckentlastung des Steuerraumes 4 erfolgt über ein Schließelement 8, welches einen Entlastungskanal 6 mit darin aufgenommener Ablaufdrossel 7 verschließt. Das in Figur 1 kugelförmig ausgebildete Schließelement 8 ist in einem Schließelementführungskörper 9 aufgenommen. Der Schließelementführungskörper 9 ist an einem Ankerbolzen 11 eines mehrteilig ausgebildeten Ankers 10 aufgenommen. An der Unterseite des Ankerbolzens 11 befindet sich ein scheibenförmig konfigurierter Anschlag 12. Der Ankerbolzen 11 ist von einer Ankerführung 13 umschlossen. Am Ankerbolzen 11 ist darüber hinaus eine Ankerplatte 15 aufgenommen. Die Ankerplatte 15 ist von einer Ankerfeder 18 umschlossen, welche die Ankerplatte 15 an ihrer Unterseite beaufschlagt und auch die Ankerführung 13 umschließt.

Im oberen Teil des Kraftstoffinjektors 1 gemäß des Standes der Technik befindet sich ein Magnetventil 17, dessen Elektromagnet durch das Bezugszeichen 16 bezeichnet ist. Der Magnetkern des Elektromagneten 16 weist eine in einem ersten Durchmesser ausgeführte Bohrung C auf, in welchen das obere Ende des Ankerbolzens 11 hineinragt. Im oberen Ende des Ankerbolzens befindet sich eine Sicherungsscheibe B, die von einer Sicherungshülse A umschlossen ist. Aufgrund der gewählten Anordnung ist das Maß C, d.h. der Durchmesser, der im Magnetkern ausgebildeten Bohrung so zu wählen, dass die Sicherungshülse A und die Sicherungsscheibe B in dieser unterzubringen sind. Demzufolge wird ein Bauraum benötigt, welcher jedoch den magnetischen Fluss im Magnetkern beeinträchtigt.

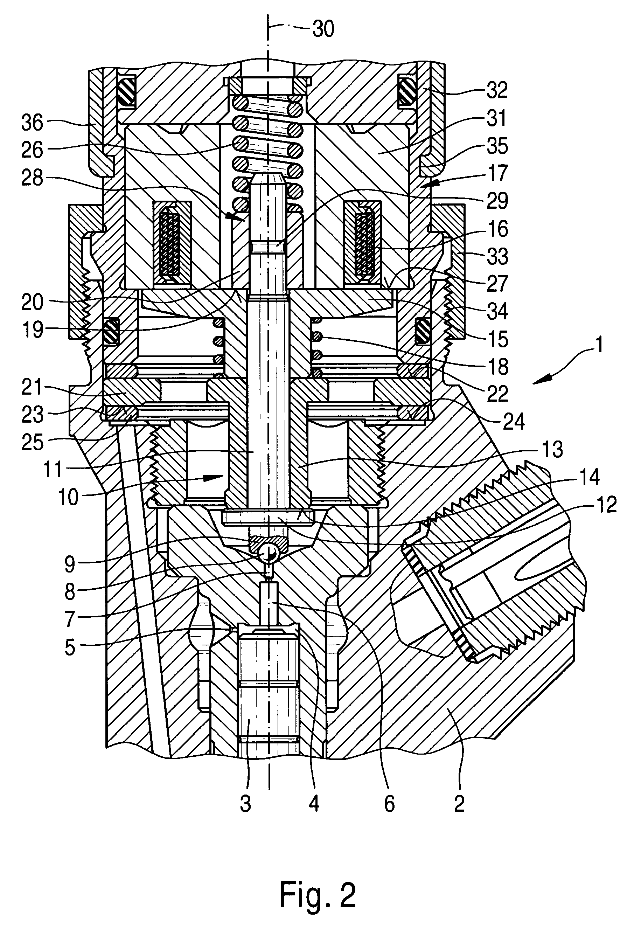

Figur 2 zeigt eine Magnetventilbaugruppe gemäß der vorliegenden Erfindung an einem Kraftstoffinjektor 1.

Der dargestellte Kraftstoffinjektor 1 ist beispielsweise als ein Kraftstoffinjektor zum Einsatz an Hochdruckspeicherräumen (Common-Rail) umfassenden Kraftstoffeinspritzanlagen für selbstzündende Verbrennungskraftmaschinen ausgebildet. Der Kraftstoffinjektor 1 umfasst den Ventilkörper 2, der das in vertikale Richtung bewegbare Einspritzventilglied 3 aufweist, welches als Düsennadel ausgebildet sein kann. Das Einspritzventilglied 3 wird über die Druckbeaufschlagung bzw. Druckentlastung des im Ventilkörper 2 ausgebildeten Steuerraums 4 betätigt. Der Steuerraum 4 ist stets über die Zulaufdrossel 5 mit einem ausreichenden Steuervolumen befüllt. Der Druck im Steuerraum 4 ist über den Entlastungskanal 6 entlastbar, der die Ablaufdrossel 7 umfasst. Bei einer Druckentlastung des Steuerraumes 4 bewegt sich das Einspritzventilglied 3 in vertikaler Richtung nach oben und gibt eine Einspritzöffnung an einem brennkammerseitigen Ende, nicht in Figur 2 dargestellt, des Kraftstoffinjektors 1 frei.

Die Druckentlastung des Steuerraums 4 erfolgt über das gemäß Figur 2 kugelförmig ausgebildetes Schließelement 8, welches von dem der Kontur des Schließelements 8 angepassten Schließelementführungskörper 9 teilweise umschlossen ist. Der Schließelementführungskörper 9 ist mit dem mehrteiligen Anker 10 verbunden. Der mehrteilige Anker 10 weist den Ankerbolzen 11 mit einem scheibenförmig konfiguriertem Anschlag 12 auf, an dem der Schließelementführungskörper 9 aufgenommen ist. Der mehrteilige Anker 10 umfasst neben dem Ankerbolzen 11 die Ankerführung 13 mit der unteren Stirnfläche 14, die sich auf dem scheibenförmig konfigurierten Anschlag 12 abstützt.

Der Ankerhub ist als Spalthöhe zwischen der Oberseite des scheibenförmigen Anschlags 12 am Ankerbolzen 11 und der unteren Stirnseite 14 der Ankerführung 13 definiert. Der Resthub, auch als Überhub bezeichnet, ist definiert als die Differenz zwischen dem vorgegebenen Hub 37 abzüglich des Ankerhubs zwischen der Ankerplatte 15 und der oberen Stirnfläche 22 der Ankerführung im Ruhezustand. Die Ankerplatte 15 wirkt mit einem Elektromagneten 16 eines Magnetventils 17 zusammen. Die Ankerplatte 15 ist unter Einwirkung ihrer trägen Masse gegen die Vorspannkraft einer Ankerfeder 18 dynamisch verschiebbar auf dem Ankerbolzen 11 gelagert und durch diese Ankerfeder 18 gegen einen Anschlag 19 an eine Fixierhülse 20 gedrückt, die auf dem Ankerbolzen 11 befestigt ist. Die Ankerführung 13 weist einen flanschartig erweiterten Abschnitt 21 mit der oberen Stirnfläche 22 und einer unteren Stirnfläche 23 auf. Die Ankerfeder 18 stützt sich gehäuseseitig über die obere Stirnfläche 22 der Ankerführung 13 ab, welche mit dem flanschartig erweitertem Abschnitt 21 zwischen dem Ventilkörper 2 des Kraftstoffinjektor 1 und dem Magnetventil 17 aufgenommen ist. Zwischen der unteren Stirnseite 23 des flanschartig erweiterten Abschnitts 21 der Ankerführung 13 und einer Auflagefläche 24 im Ventilkörper 2 des Kraftstoffinjektor 1 ist eine Einstellscheibe 25 angeordnet, über die der Ankerhub eingestellt wird. Durch eine sich gehäusefest abstützende Schließfeder 26 sind der Ankerbolzen 11, sowie mit ihm die Ankerplatte 15 und das mit dem Ankerbolzen 11 verbundene Schließelement 8 ständig in Schließrichtung beaufschlagt, so dass sich das Schließelement 8 in der Schließstellung befindet. Bei Erregung des Elektromagneten 16 wird die Ankerplatte 15 angezogen und dabei wird der Entlastungskanal 6 geöffnet.

Der Ankerbolzen 11 weist in seinem über eine obere Stirnseite 27 der Ankerplatte 15 hinausragenden Abschnitt 28 eine Rille 29, die senkrecht zur Symmetrielinie 30 verläuft. Anstelle der Rille 29 kann dort auch eine Schulter ausgebildet sein oder ein mit erhöhter Rauhigkeit ausgeführter Oberflächenbereich des Ankerbolzens 11 zur Befestigung der Fixierhülse 20.

Das Magnetventil 17 umfasst den Elektromagneten 16, der mit der oberen Stirnseite 27 der Ankerplatte 15 des mehrteiligen Ankers 10 gegenüberliegend angeordnet ist. Der Magnetkern 31, der den Elektromagneten 16 umschließt, ist seinerseits von einer Magnethülse 32 umschlossen, die mittels einer Überwurfmutter 33 an einem Außengewinde 34 des Ventilkörpers 2 befestigt ist. Die Magnethülse 32 umfasst darüber hinaus ringförmig verlaufende Ausnehmungen 35, in welchen ein Verschluss 36 einrastet. Die Bohrung im Magnetkern 31 ist in einem zweiten Durchmesser D ausgeführt, der gering ist als der erste Durchmesser des Magnetkerns gemäß der Darstellung in Figur 1. Dadurch werden die Eigenschaften des Magnetkerns hinsichtlich einer Verbesserung des magnetischen Flusses erheblich günstiger.

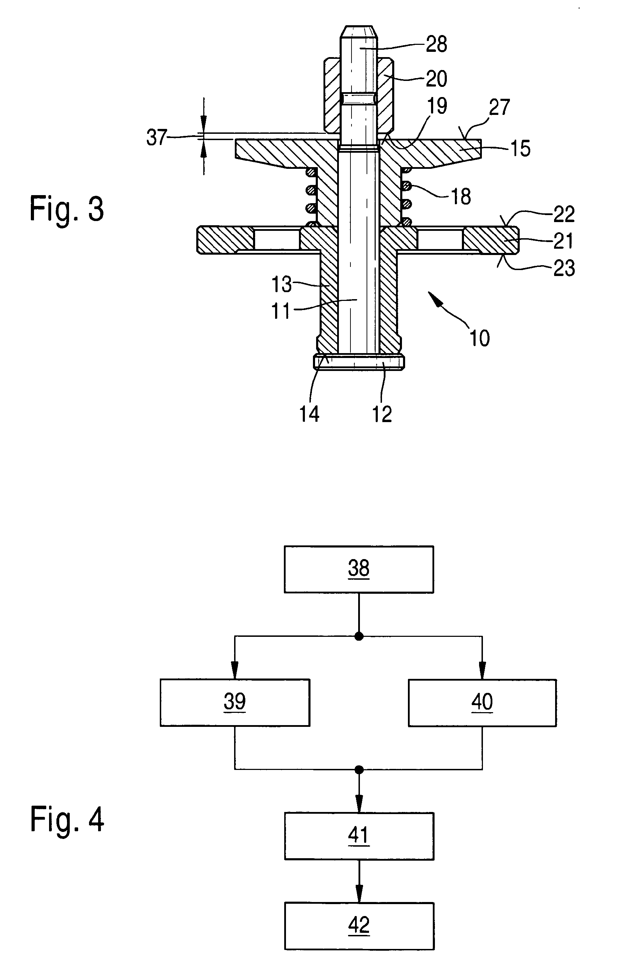

Zur Verdeutlichung ist in Figur 3 der mehrteilige Anker 10 mit seinen Bauteilen und dem vorgegebenen Hub 37 dargestellt, der sich aus dem Ankerhub und dem Resthub (Überhub) zusammensetzt. Im eingebauten Zustand entspricht der Ankerhub der Spalthöhe zwischen dem scheibenförmigen Anschlag 12 und der unteren Stirnseite der Ankerführung 13. Der Resthub (Überhub) entspricht der Differenz zwischen dem vorgegebenen Hub 37 abzüglich des Ankerhubs zwischen der oberen Stirnfläche 22 der Ankerführung 13 und der Ankerplatte 15. An dem Ankerbolzen 11, der den scheibenförmig konfigurierten Anschlag 12 auf weist, ist die Ankerführung 13 aufgenommen. Die Ankerführung 13 verfügt über den flanschartig erweiterten Abschnitt 21, der mit seiner unteren Stirnfläche 23 auf welche die den Ankerhub festlegende, nach Dicke klassierte Einstellscheibe 25 zu liegen kommt. Die Dicke der Einstellscheibe 25 legt den Ankerhub fest, wenn die Ankerführung 13 bei der Montage des mehrteiligen Ankers 10 zwischen Magnethülse 32 und Kraftstoffinjektor 1 mittels der Überwurfmutter 33 verschraubt wird (nicht dargestellt). An dem Ankerbolzen 11 ist die Ankerplatte 15 vorgespannt durch die Ankerfeder 18 gleitverschiebbar gelagert. Die Festlegung des vorgegebenen Hubs 37, d.h. die maximale Weglänge, die der Ankerplatte 15 zur Verfügung steht, wird über Anschläge festgelegt. Der scheibenförmig konfigurierte Anschlag 12 des Ankerbolzens 11 in Zusammenspiel mit der unteren Stirnfläche 14 der Ankerführung 13 stellt eine obere Begrenzung des Ankerbolzens 11 dar. Die untere Begrenzung des Weges des Ankerbolzens 11 ist durch die Schließposition des Schließelements 8 gegeben, d.h. wenn sich dieses in seinen Sitz oberhalb des Entlastungskanals 6 im Ventilkörper 2 des Kraftstoffinjektors 1 befindet.

Der Anschlag 19 der Fixierhülse 20 bildet eine obere Begrenzung für die Ankerplatte 15, wobei die Fixierhülse 20 an dem Ankerbolzen 11 an dem oberen Ankerbolzenabschnitt 28 entsprechend der Hub- und Toleranzanforderungen positioniert und fixiert wird. Die untere Begrenzung des Weges der Ankerplatte 15 ist durch die obere Stirnfläche 22 am flanschartigen Abschnitt 21 der Ankerführung 13 gegeben.

Die Montage des mehrteiligen Ankers 10 einschließlich der Fixierhülse 20 gliedert sich in folgende Schritte, die in dem Blockdiagramm der Figur 4 dargestellt sind. In einem ersten Schritt 38 werden an dem Ankerbolzen 11 die Ankerführung 13, die Ankerfeder 18 und die Ankerplatte 15 aufgesteckt. In einem zweiten Schritt 39, 40 wird der vorgegebene Hub 37 eingestellt, der sich aus Ankerhub und Überhub zusammensetzt. Der vorgegebene Hub 37 kann in unterschiedlicher Weise eingestellt werden. So kann eine inkompressible, reißfeste Folie den vorgegebenen Hub 37 definieren, wobei die Dicke der Folie im Wesentlichen dem vorgegebenen Hub 37 entspricht. Die Folie kann zwischen Ankerplatte 15 und der oberen Stirnseite 22 der Ankerführung 13 eingebracht werden. Alternativ kann die Folie aber auch zwischen der oberen Stirnfläche 27 der Ankerplatte 15 und dem Anschlag 19 der Fixierhülse 20 während des zweiten Schrittes 39 eingelegt werden.

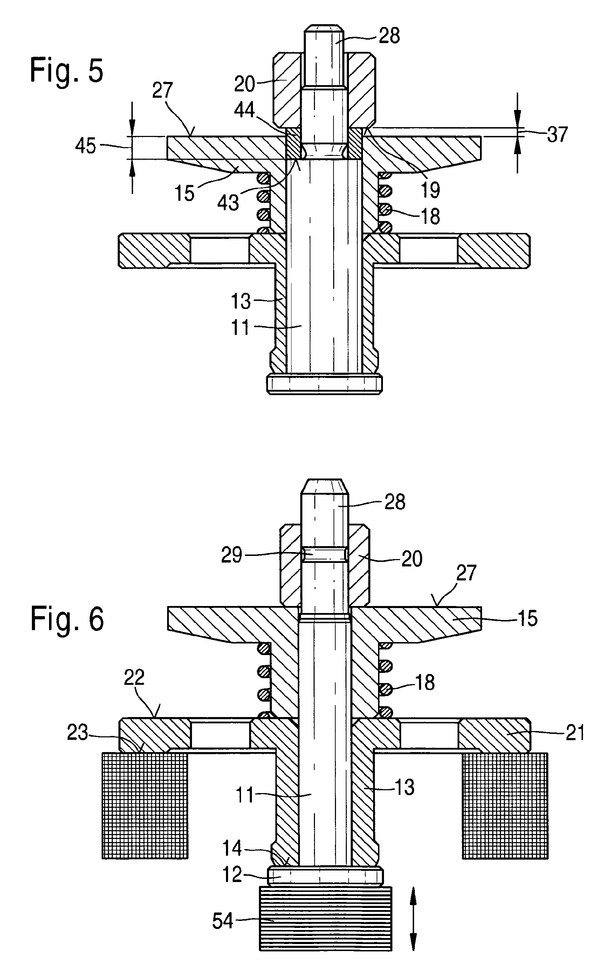

Für den zweiten Schritt in Figur 4 wird, nicht Gegenstand der Erfindung, mit Bezugszeichen 40 eine Alternative zur Festle-gung der Position der Fixierhülse 20 beschrieben. In den mehrteiligen Anker 10 wird eine Einstellscheibe 44 integriert, deren Dicke sich bestimmt aus dem vorgegebenen Hub 37 und einem aus der Geometrie von Ankerbolzen 11 und Ankerplatte 15 zu bestimmenden Maß, welches in Figur 5 näher erläutert wird.

In einem dritten erfindungsgemäßen Schritt 41 wird die Fixierhülse 20 an dem Ankerbolzen 11 in Position gebracht und dort mit einer Vorspannkraft in axialer Richtung in Lage gehalten. In einem vierten, mit 42 gekennzeichneten Schritt, wird die Fixierhülse 20 derart mit dem Ankerbolzen 11 verbunden, dass die Ankerplatte 15 um den vorgegebene Hub 37 dynamisch an dem Ankerbolzen 11 entlang verschiebbar ist, wobei als der obere Anschlag der Anschlag 19 der Fixierhülse 20 fungiert.

Unter Bezugnahme auf die Figur 5 wird, nicht Gegenstand der Erfindung, die alternative Lösung gemäß des zweiten Schrittes 40 nach dem Verfahrensschema in Figur 4 zur Festlegung der Position der Fixierhülse 20 dargestellt. Auf den Ankerbolzen 11 ist die Ankerführung 13, die Ankerfeder 18 und die Ankerplatte 15 aufgesteckt. Der Ankerbolzen 11 weist in seinem oberen Abschnitt 28 eine abgestufte Gestaltung auf, so dass sich eine Auflagefläche 43 innerhalb des Überdeckungsbereichs der Ankerplatte 15 mit dem Ankerbolzen 11 ausbildet. Auf die Auflagefläche 43 wird die Einstellscheibe 44 aufgebracht. Der Abstand der Auflagefläche 43 zur oberen Stirnfläche 27 der Ankerplatte 15 wird als Rückstellmaß 45 bezeichnet. Eine zu ermittelnde Dicke der Einstellscheibe 44 bestimmt sich im Wesentlichen als Summe aus dem Rückstellmaß 45 und dem vorgegebenen Hub 37, der den Ankerhub und den Überhub repräsentiert. Eine entsprechend ausgewählte Einstellscheibe 44 wird auf den Ankerbolzen 11 auf die Auflagefläche 43 aufgebracht. Die auf den Ankerbolzen 11 aufgebrachte Fixierhülse 20 wird dann mit ihrem Anschlag 19 anliegend an der Einstellscheibe 44 positioniert.

Gemäß einer nicht erfindungsgemäßen Variante kann der vorgegebene Hub 37 mittels eines Piezoschrittmotors 54 dargestellt werden (vgl. auch Figur 6). Hierbei wird der Verbund aus Ankerbolzen 11, Ankerführung 13, Ankerplatte 15 und Ankerfeder 18 auf eine verschieblich gelagerte Auflage aufgesetzt. Diese Auflage wird so lange nach unten verschoben, bis der Ankerbolzen 11 mit seinem scheibenförmigen Anschlag 12 auf dem Piezoschrittmotor 50 aufliegt. Die verschieblich gelagerte Auflage wird dann in ihrer Position festgestellt. Danach wird der Piezoschrittmotor 54 um den Hub 37 abgesenkt, so dass zwischen der Ankerführung 13 und dem Ankerbolzen 11 der Hub 37 entsteht. Die Fixierhülse 20 wird dann auf den Ankerbolzen 11 aufgeschoben, bis sie bündig an der Ankerplatte 15 anliegt. Dann werden die Fixierhülse 20 und der Ankerbolzen 11 in ihrer Position fixiert.

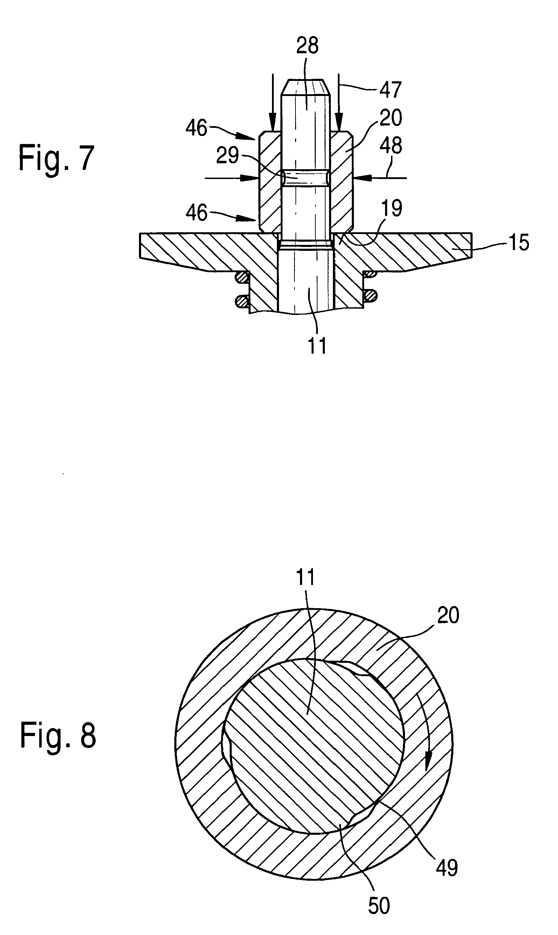

Ist erfindungsgemäß die Fixierhülse 20 positioniert, so dass der vorgegebene Hub 37 als maximale Weglänge zur Verfügung steht, wird die Fixierhülse 20 mit dem Ankerbolzen 11 verbunden. In Figur 7 ist die Fixierhülse 20 in einer Ausführungsform dargestellt. Die Fixierhülse 20 weist den Anschlag 19 auf, der zur Festlegung des vorgegebenen Hubs 37 dient, um die maximale Weglänge zu begrenzen, die die Ankerplatte 15 am Ankerbolzen 11 entlang gleitet. Der Ankerbolzen 11 weist in dem oberen Ankerbolzenabschnitt 28, den die Fixierhülse 20 überdeckt, erfindungsgemäß eine Rille 29 oder Schulter auf, die vorgesehen ist, um radial wirkende Kräfte aufzunehmen. Die Fixierhülse 20 kann erfindungsgemäß gehärtete Bereiche 46 aufweisen, die auch nach der Verbindung von Ankerbolzen 11 und Fixierhülse 20 eine Maßhaltigkeit der Fixierhülse 20 gewährleisten. Die gehärteten Bereiche 46 befinden sich vorteilhaft an den Endbereichen der Fixierhülse 20, während in einem mittleren Abschnitt das Material relativ weich ist. Die Verbindung der Fixierhülse 20 an dem Ankerbolzen 11 kann erfolgen, in dem die mit einer Vorspannkraft 47 in axialer Richtung positionierte Fixierhülse 20 mit einer Verpresskraft 48 in radialer Richtung beaufschlagt wird. Hierbei kann ein Werkzeug die Fixierhülse 20 soweit umschließen, dass die radial eingeleitete Verpresskraft 48 eine Stauchung des Materials der Fixierhülse 20 auf Höhe der Rille 29 hervorruft. Das verformte Material der Fixierhülse 20 kann nur nach innen in die Rille 29 des Ankerbolzens 11 fließen. Kommt es zu der plastischen Verformung des Materials der Fixierhülse 20 im Einleitungsbereich der Verpresskraft 48, kann so eine kraft- und/oder formschlüssige Verbindung zwischen Fixierhülse 20 und Ankerbolzen 11 hergestellt werden. Alternativ besteht die Möglichkeit, den Ankerbolzenabschnitt 28, an dem die Fixierhülse 20 aufgebracht wird, mit erhöhter Oberflächenrauhigkeit auszuführen und die Fixierhülse 20 dort durch Reibschluss zu befestigen.

Bei der Einstellung der Position der Fixierhülse 20 mittels der Einstellscheibe 44 wird die Fixierhülse 20 mit Anschlag an die Einstellscheibe 44 auf den Ankerbolzen 11 gepresst. So kommt es nur in dem Bereich zwischen der Auflagefläche 43 am Ankerbolzen 11 und dem Anschlag 19 der Fixierhülse 20 zu einer elastischen Verformung des Ankerbolzens 11. Dies bedingt nur eine geringe Rückfederung und somit eine minimale Beeinflussung des vorgegebenen Hubs 37.

In Figur 8 ist eine alternative Verbindung von Fixierhülse 20 und Ankerbolzen 11 dargestellt. Im Schnitt ist der Ankerbolzen 11 gezeigt, der an seinem Umfang einen oder mehrere Keile 49 verteilt aufweist. Die im Schnitt dargestellte Fixierhülse 20 weist an ihrem Innendurchmesser einen oder mehrere Erhebungen 50 auf. Durch Verdrehen der mit einer axialen Vorspannkraft 47 aufgebrachten Fixierhülse 20, greifen die jeweiligen Keile 49 und die Erhebungen 50 ineinander, wobei sich die Presskraft mit dem Drehwinkel erhöht, wenn mehrere Keil-/Erhebungs-Paare ineinander greifen.

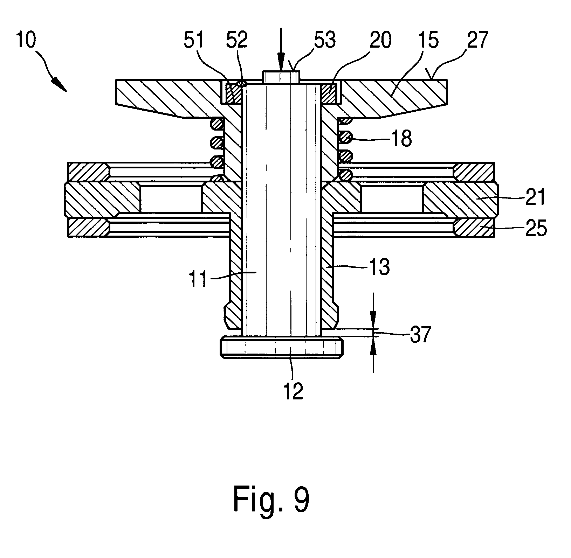

In Figur 9 ist eine weitere Möglichkeit gezeigt, um die Verbindung zwischen positionierter Fixierhülse 20 und Ankerbolzen 11 herzustellen. Hierbei ist der mehrteilige Anker 10 mit Ankerbolzen 11, Ankerführung 13, Ankerfeder 18 und Ankerplatte 15 dargestellt. Die Ankerplatte 15 weist an ihrer oberen Stirnseite 27 eine gestufte Gestaltung auf. Auf einer ringförmigen Schulter 51 innerhalb der Ankerplatte 15 kann die Fixierhülse 20 zu liegen kommen. Die Fixierhülse 20 kann dann in ihrer Position, zur Festlegung des vorgegebenen Hubs 37, mit dem Ankerbolzen 11 an Schweißpunkten 52 verbunden werden.

Wie in Figur 9 beispielhaft dargestellt, kann es vorteilhaft sein, dass die Schließfeder 26, welche den Ankerbolzen 11 in Schließrichtung des Schließelements 8 belastet, nicht an der Fixierhülse 20, sondern an einer Stirnfläche 53 des Ankerbolzens 11 selbst angreift. Somit kann der Bauraum des mehrteiligen Ankers 10, der in dem Magnetkern 31 liegt verkleinert werden, was eine Magnetkraftsteigerung aufgrund eines verbesserten magnetischen Flusses bewirkt.

### Bezugszeichenliste

- 1: Kraftstoffinjektor
- 2: Ventilkörper
- 3: Einspritzventilglied
- 4: Steuerraum
- 5: Zulaufdrossel
- 6: Entlastungskanal
- 7: Ablaufdrossel
- 8: Schließelement
- 9: Schließelementführungskörper
- 10: Mehrteiliger Anker
- 11: Ankerbolzen
- 12: Scheibenförmig konfigurierter Anschlag
- 13: Ankerführung
- 14: Untere Stirnseite der Ankerführung
- 15: Ankerplatte
- 16: Elektromagnet
- 17: Magnetventil
- 18: Ankerfeder

- A: Sicherungshülse
- B: Sicherungsscheibe
- C: erster Durchmesser Magnetkern
- D: zweiter Durchmesser Magnetkern

- 19: Anschlag
- 20: Fixierhülse
- 21: Flanschartiger Abschnitt der Ankerführung
- 22: Obere Stirnfläche
- 23: Untere Stirnfläche
- 24: Auflagefläche
- 25: Einstellscheibe
- 26: Schließfeder
- 27: Obere Stirnseite der Ankerplatte
- 28: Ankerbolzenabschnitt
- 29: Rille
- 30: Symmetrielinie
- 31: Magnetkern
- 32: Magnethülse
- 33: Überwurfmutter
- 34: Außengewinde
- 35: Ausnehmung
- 36: Verschluss
- 37: vorgegebener Hub
- 38: 1. Schritt
- 39,40: 2. Schritt
- 41: 3. Schritt
- 42: 4. Schritt
- 43: Auflagefläche
- 44: Einstellscheibe
- 45: Rückstellmaß
- 46: Bereiche der Fixierhülse
- 47: Vorspannkraft
- 48: Verpresskraft
- 49: Keile
- 50: Keile
- 51: ringförmige Schulter
- 52: Schweißpunkte
- 53: Stirnfläche Ankerbolzen
- 54: Piezoschrittmotor

## Patentansprüche

1. Verfahren zur Einstellung eines vorgegebenen Hubs (37) eines einen Ankerbolzen (11), einen ersten Anschlag (12), eine Ankerfeder (18), mindestens ein auf dem Ankerbolzen (11) verschiebbares Element (13,15) und mindestens eine Fixierhülse (20) aufweisenden mehrteiligen Ankers (10) eines Magnetventils (17) mit folgenden Schritten:
a.) das mindestens eine verschiebbare Element (13,15) wird auf den mindestens einen Ankerbolzen (11) aufgebracht;
b.) eine mindestens einen Anschlag (19) aufweisende Fixierhülse (20) wird auf den Ankerbolzen (11) aufgebracht;
c.) die mindestens eine Fixierhülse (20) wird derart mit dem mindestens einen Ankerbolzen (11) verbunden, dass das mindestens eine verschiebbare Element (13,15) um einen vorgegebenen Hub (37) zwischen dem ersten Anschlag (12) und dem an der mindestens einen Fixierhülse (20) ausgebildeten Anschlag (19) verschiebbar ist;
d.) eine Folie mit einer Dicke, die dem vorgegebenen Hub (37) entspricht, wird zwischen den Bauteilen des mehrteiligen Ankers (10) eingebracht;
e.) die Fixierhülse (20) wird mit dem Ankerbolzen (11) derart gefügt, dass das mindestens eine verschiebbare Element (13,15) an den mit der Fixierhülse (20) verbundenem Anschlag (19) anliegt;
f.) die Folie wird danach entfernt.

2. Verfahren nach Anspruch 1, **dadurch gekennzeichnet, dass** die Fixierhülse (20) mit dem Ankerbolzen (11) verbunden wird, in dem sie mit einer Vorspannkraft (47) in axialer Richtung belastet, in Position gehalten und eine Verpresskraft (48) radial in die Fixierhülse (20) eingebracht wird.

3. Verfahren nach Anspruch 2, **dadurch gekennzeichnet, dass** der Ankerbolzen (11) in einem Ankerbolzenbereich (28) der Fixierhülse (20) eine Rille (29), eine Schulter (29) oder eine in erhöhter Oberflächenrauhigkeit ausgeführte Oberfläche aufweist.

4. Verfahren nach Anspruch 2, **dadurch gekennzeichnet, dass** die Fixierhülse (20) mit dem Ankerbolzen (11) derart verbunden ist, dass eine kraft- und/oder formschlüssige Verbindung entsteht.

5. Verfahren nach Anspruch 1, **dadurch gekennzeichnet, dass** die Fixierhülse (20) mit dem Ankerbolzen (11) verschweißt wird.

6. Verfahren nach Anspruch 1, **dadurch gekennzeichnet, dass** die Fixierhülse (20) mit einer Kreiskeilverbindung (49, 50) am Ankerbolzen (11) gesichert wird.

## Claims

1. Method for setting a predetermined stroke (37) of a multi-part armature (10) of a solenoid salve (17), which armature has an armature bolt (11), a first stop (12), an armature spring (18), at least one element (13, 15) displaceable on the armature bolt (11), and at least one fixing sleeve (20), the method having the following steps:
a.) the at least one displaceable element (13, 15) is attached onto the at least one armature bolt (11);
b.) a fixing sleeve (20) having at least one stop (19) is attached onto the armature bolt (11);
c.) the at least one fixing sleeve (20) is connected to the at least one armature bolt (11) in such a way that the at least one displaceable element (13, 15) is displaceable by the amount of a predetermined stroke (37) between the first stop (12) and the stop (19) formed on the at least one fixing sleeve (20);
d.) a film with a thickness which corresponds to the predetermined stroke (37) is introduced between the components of the multi-part armature (10);
e.) the fixing sleeve (20) is joined to the armature bolt (11) in such a way that the at least one displaceable element (13, 15) bears against the stop (19) connected to the fixing sleeve (20);
f.) the film is subsequently removed.

2. Method according to Claim 1, **characterized in that** the fixing sleeve (20) is connected to the armature bolt (11) **in that** the said fixing sleeve is held, loaded with a prestressing force (47) in the axial direction, in position, and a pressing force (48) is introduced radially into the fixing sleeve (20).

3. Method according to Claim 2, **characterized in that** the armature bolt (11) has, in an armature-bolt region (28) of the fixing sleeve (20), a groove (29), a shoulder (29) or a surface executed with increased surface roughness.

4. Method according to Claim 2, **characterized in that** the fixing sleeve (20) is connected to the armature bolt (11) in such a way that a non-positive and/or positive connection is obtained.

5. Method according to Claim 1, **characterized in that** the fixing sleeve (20) is welded to the armature bolt (11).

6. Method according to Claim 1, **characterized in that** the fixing sleeve (20) is secured on the armature bolt (11) by means of a circular keying (49, 50).

## Revendications

1. Procédé pour l'ajustement d'une course prédéterminée (37) d'un induit (10) en plusieurs parties d'une électrovanne (17) présentant un boulon d'induit (11), une première butée (12), un ressort d'induit (18), au moins un élément (13, 15) déplaçable sur le boulon d'induit (11) et au moins une douille de fixation (20), comprenant les étapes suivantes :
a.) l'au moins un élément déplaçable (13, 15) est monté sur l'au moins un boulon d'induit (11) ;
b.) une douille de fixation (20) présentant au moins une butée (19) est montée sur le boulon d'induit (11) ;
c.) l'au moins une douille de fixation (20) est connectée à l'au moins un boulon d'induit (11) de telle sorte que l'au moins un élément déplaçable (13, 15) puisse être déplacé sur une course prédéterminée (37) entre la première butée (12) et la butée (19) réalisée sur l'au moins une douille de fixation (20) ;
d.) un film ayant une épaisseur qui correspond à la course prédéterminée (37) est interposé entre les composants de l'induit (10) en plusieurs parties ;
e.) la douille de fixation (20) est assemblée au boulon d'induit (11) de telle sorte que l'au moins un élément déplaçable (13, 15) s'applique contre la butée (19) connectée à la douille de fixation (20) ;
f.) le film est ensuite enlevé.

2. Procédé selon la revendication 1, **caractérisé en ce que** la douille de fixation (20) est connectée au boulon d'induit (11), en étant sollicitée par une force de précontrainte (47) dans la direction axiale, en étant maintenue en position, et en appliquant une force de pression (48) radialement dans la douille de fixation (20).

3. Procédé selon la revendication 2, **caractérisé en ce que** le boulon d'induit (11) présente, dans une région de boulon d'induit (28) de la douille de fixation (20), une gorge (29), un épaulement (29) ou une surface réalisée avec une rugosité de surface accrue.

4. Procédé selon la revendication 2, **caractérisé en ce que** la douille de fixation (2) est connectée au boulon d'induit (11) de telle sorte que l'on obtienne une connexion par engagement par force et/ou par correspondance géométrique.

5. Procédé selon la revendication 1, **caractérisé en ce que** la douille de fixation (20) est soudée au boulon d'induit (11).

6. Procédé selon la revendication 1, **caractérisé en ce que** la douille de fixation (20) est fixée au boulon d'induit (11) par une connexion par clavette circulaire (49, 50).
